(19) **Europäisches Patentamt**
**European Patent Office**
**Office européen des brevets**

(11) **EP 1 396 361 B1**

(12) **EUROPÄISCHE PATENTSCHRIFT**

(45) Veröffentlichungstag und Bekanntmachung des Hinweises auf die Patenterteilung:
**27.02.2008   Patentblatt 2008/09**

(51) Int Cl.:
***B60H 1/22*** *(2006.01)*

(21) Anmeldenummer: **02019962.6**

(22) Anmeldetag: **05.09.2002**

(54) **Elektrische Heizung für Kraftfahrzeuge sowie Regelungsverfahren**

Electric heating device for vehicle and method for controlling it

Chauffage éléctrique pour un véhicule et son procédé de régulation

(84) Benannte Vertragsstaaten:
**DE FR GB**

(43) Veröffentlichungstag der Anmeldung:
**10.03.2004   Patentblatt 2004/11**

(73) Patentinhaber: **Ford Global Technologies, LLC Dearborn, MI 48126 (US)**

(72) Erfinder:
• **Schneider, Stephan**
**42477 Radevormwald (DE)**

• **Frielingsdorf, Bernd C.**
**51467 Bergisch Gladbach (DE)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
**EP-A- 1 184 216          US-B1- 6 262 400**

**Beschreibung**

Die Erfindung betrifft ein elektrisches Heizsystem für ein Kraftfahrzeug, enthaltend ein Heizelement zur Umwandlung der einer elektrischen Energiequelle entnommenen elektrischen Leistung in Wärme sowie ein Regelungssystem zur Regelung der Zufuhr elektrischer Leistung zu dem Heizelement. Ferner betrifft die Erfindung ein Verfahren zur Regelung der Zufuhr der einer elektrischen Energiequelle entnommenen elektrischen Leistung an das Heizelement eines Kraftfahrzeuges.

Aufgrund der zunehmenden Effizienz moderner Kraftfahrzeugmotoren, insbesondere Dieselmotoren, reicht die vom Motor abgegebene Abwärme in vielen Fällen nicht mehr aus, um die Fahrgastkabine hinreichend aufzuheizen. Aus diesem Grunde werden elektrische Heizsysteme im Kraftfahrzeug vorgesehen, welche ein Heizelement zur Umwandlung der einer elektrischen Energiequelle, z. B. der Lichtmaschine oder der Batterie, entnommenen elektrischen Leistung in Wärme aufweisen. Ein aus zwei PTC-Heizelementen (PTC: Positiver Temperaturkoeffizient) aufgebautes Heizsystem wird zum Beispiel in der US 6 002 105 beschrieben. In Abhängigkeit von den Heizungsanforderungen der Kabine werden dabei die beiden Heizelemente von einem Regelungssystem wahlweise an- oder ausgeschaltet.

Weiterhin ist zu beobachten, daß bei modernen Kraftfahrzeugen durch den zunehmenden Einsatz von Elektronik und elektrischen Verbrauchern der Bedarf an elektrischer Energie steigt. Dies führt bei den bekannten, in Stufen geschalteten Heizsystemen dazu, daß diese die elektrische Energiequelle überlasten können beziehungsweise daß sie vorsorglich in einem Zustand unterhalb der Maximalleistung betrieben werden müssen.

Aus der US 6 262 400 B1 ist ein Heizsystem für ein Kraftfahrzeug nach dem Oberbegriff des Anspruchs 1 bekannt, bei welchem ein Regelungssystem die Zufuhr elektrischer Leistung von einer Lichtmaschine zu einem elektrischen Heizelement steuert. Das Regelungssystem beobachtet dabei über einen Vergleich der aktuellen Batteriespannung mit einem Referenzwert, ob die Lichtmaschine momentan die Batterie aufladen kann oder nicht. Falls wegen einer hohen Belastung der Lichtmaschine die Batterie nicht aufgeladen werden kann, wird die Leistungszufuhr zum Heizelement mit einer schnellen Rampe auf Null zurückgefahren.

Vor diesem Hintergrund war es Aufgabe der vorliegenden Erfindung, ein elektrisches Heizsystem für ein Kraftfahrzeug und ein Verfahren zu dessen Regelung bereitzustellen, durch welches die Bereitstellung maximaler Heizleistung sichergestellt wird, wobei eine ausreichende Verfügbarkeit der elektrischen Energiequelle für andere Verbraucher sowie für ein Starten des Motors gewährleistet sein soll.

Diese Aufgabe wird durch ein Heizsystem mit den Merkmalen des Anspruchs 1 sowie durch ein Verfahren mit den Merkmalen des Anspruchs 6 gelöst.

Vorteilhafte Ausgestaltungen sind in den Unteransprüchen enthalten.

Das erfindungsgemäße elektrische Heizsystem für ein Kraftfahrzeug enthält ein Heizelement, mit welchem die einer elektrischen Energiequelle entnommene elektrische Leistung in Wärme umgewandelt wird. Ferner ist ein Regelungssystem vorgesehen, das dahingehend ausgebildet ist, die Größe der dem Heizelement zugeführten elektrischen Leistung zu regeln.

Das Regelungssystem erhält ein Zustandssignal welches die aktuelle Leistungsbereitschaft der Energiequelle anzeigt, also eine Information darüber gibt, wie viel Leistung die Energiequelle momentan (maximal) abgeben kann. Ferner ist das Regelungssystem dahingehend ausgebildet, die dem Heizelement zugeführte elektrische Leistung in Abhängigkeit von dem genannten Zustandssignal einzustellen.

Das Regelungssystem ist ferner dahingehend ausgebildet, das Zustandssignal mit einem Proportional-Integral (PI) Regelungsalgorithmus zu verarbeiten. Ein derartiger Algorithmus hat ein gut bekanntes Regelungsverhalten, so dass sich eine stabile und zuverlässige Heizungsregelung einstellen lässt.

Ein derartiges Heizsystem hat den Vorteil, bei der Zuteilung elektrischer Leistung an das Heizelement die aktuelle Leistungsfähigkeit der Energiequelle zu berücksichtigen. Daher kann das Heizsystem insbesondere bei einer geringen aktuellen Leistungsfähigkeit die Energiezufuhr zum Heizelement drosseln, so dass die Energiequelle geschont wird und ausreichend leistungsfähig für Aufgaben mit einer höheren Priorität - wie zum Beispiel dem Starten des Motors - bleibt. Andererseits ist das Heizsystem jedoch auch in der Lage, die zur Verfügung stehende Leistungsbereitschaft der Energiequelle bis an die zulässigen Grenzen auszunutzen, so daß eine schnellstmögliche Aufheizung der Kabine des Kraftfahrzeuges ermöglicht wird.

Gemäß einer bevorzugten Ausgestaltung des Heizsystems ist das Regelungssystem über eine Leistungsstufe mit dem Heizelement gekoppelt, wobei die Leistungsstufe eine kontinuierliche (stufenlose) Einstellung der an das Heizelement abgegebenen elektrischen Leistung ermöglicht. Anders als bei bekannten Heizsysteten kann die dem Heizelement zugeführte Leistung somit nicht nur in diskreten, verhältnismäßig großen Schritten verändert werden, sondern praktisch beliebig fein. Hierdurch wird es möglich, die Leistungsbereitschaft der Energiequelle bis an die zulässigen Grenzen auszuschöpfen.

Vorzugsweise enthält die elektrische Energiequelle eine Lichtmaschine, das heißt einen (Drehstrom-)Generator, wobei das an das Regelungssystem übermittelte Zustandssignal von der Auslastung der Lichtmaschine abhängt. Insbesondere kann das Zustandssignal den Arbeitszyklus bzw. das Taktverhältnis (duty cycle) der Lichtmaschine repräsentieren. Bei dieser Ausführungsform wird der besonders wichtige Leistungszustand der Lichtmaschine berücksichtigt, da diese für die Bereitstellung aller laufenden elektrischen Energieentnahmen hauptverantwortlich ist. Über die Auslastung der Lichtmaschine wird auch erfaßt, in welchem Ausmaß andere Verbraucher des Kraftfahrzeuges der Energiequelle Leistung entnehmen.

Gemäß einer Weiterbildung des Heizsystems ist dessen Regelungssystem mit einer Benutzerschnittstelle gekoppelt. An der Benutzerschnittstelle kann zum Beispiel optisch oder akustisch die momentan dem Heizelement zugeführte elektrische Leistung angezeigt werden, so daß der Benutzer des Kraftfahrzeuges hierüber informiert wird. Zusätzlich oder alternativ kann die Benutzerschnittstelle auch für die Eingabe von Einstellsignalen durch einen Benutzer eingerichtet sein, wobei diese Einstellsignale insbesondere vom Benutzer wählbare Parameter wie die gewünschte Kabinentemperatur sein können.

Entsprechend einer anderen Weiterbildung des Heizsystems ist dessen Regelungssystem mit Signalleitungen gekoppelt, welche Signale betreffend die Umgebungstemperatur des Kraftfahrzeuges, die Motortemperatur, die Kabinentemperatur, die Luftfeuchtigkeit, die Batteriespannung, den Batterieladezustand und/oder den Zustand anderer elektrischer Verbraucher anzeigen. Durch die Kopplung mit diesen Signalleitungen ist das Regelungssystem in der Lage, die betreffenden I n-formationen bei der Festlegung der dem Heizelement zugeführten Leistung zu berücksichtigen und so eine optimale Regelung der Heizung zu verwirklichen.

Die Erfindung betrifft weiterhin ein Verfahren zur Regelung der Zufuhr der einer elektrischen Energiequelle entnommenen elektrischen Leistung an das Heizelement eines Kraftfahrzeuges. Das Verfahren kann dabei insbesondere bei einem Heizsystem der vorstehend beschriebenen Art eingesetzt werden. Das Verfahren ist dadurch gekennzeichnet, dass die Leistungszufuhr in Abhängigkeit von einem Zustandssignal geregelt wird, welches die Leistungsbereitschaft der Energiequelle anzeigt. Wie vorstehend in Zusammenhang mit dem Heizungssystem erläutert wurde, kann hierdurch das Heizelement so betrieben werden, dass einerseits die Energiequelle entsprechend den gesetzten Prioritäten der Verbraucher jederzeit eine ausreichende Leistungsfähigkeit behält und dass andererseits die maximale Heizleistung erzielt wird. Vorzugsweise wird die dem Heizelement zugeführte Leistung kontinuierlich (statt in Stufen) eingestellt, um die verfügbaren Grenzen möglichst vollständig auszuschöpfen.

Weiterhin wird die Zufuhr elektrischer Leistung beziehungsweise das zugehörige Kontrollsignal mit einem Proportional-Integral (PI) Algorithmus berechnet. Dieser Algorithmus kann dabei sowohl zeitdiskret als auch zeitkontinuierlich implementiert werden.

Bei dem genannten PI-Algorithmus werden zwei unterschiedliche Proportionalfaktoren verwendet, welche je nach Vorzeichen des Zustandssignals angewendet werden. Wenn z.B. bei entsprechender Definition ein negatives Zustandssignal anzeigt, dass die Energiequelle keine weitere Leistung liefern kann beziehungsweise bereits überlastet ist, kann dies mit einem größeren Proportionalfaktor berücksichtigt werden, als wenn durch das Zustandssignal eine positive, noch vorhandene Leistungskapazität angezeigt wird.

Bei dem Verfahren wird vorteilhafterweise die Zufuhr elektrischer Leistung bzw. das diese Zufuhr steuernde Kontrollsignal auf einen Maximalwert begrenzt, so dass eine Überlastung des Heizelementes ausgeschlossen wird.

Im Folgenden wird die Erfindung mit Hilfe der Figuren beispielhaft näher erläutert.

Es zeigen:

Fig. 1    ein Regelungsschema des erfindungsgemäßen Heizsystems für ein Kraftfahrzeug;

Fig. 2    in einem Blockdiagramm den im Regler des Systems gemäß Figur 1 implementierten PI-Algorithmus, und

Fig. 3    ein Diagramm mit der dem Heizelement zugeführten Leistung in Abhängigkeit von der Temperatur.

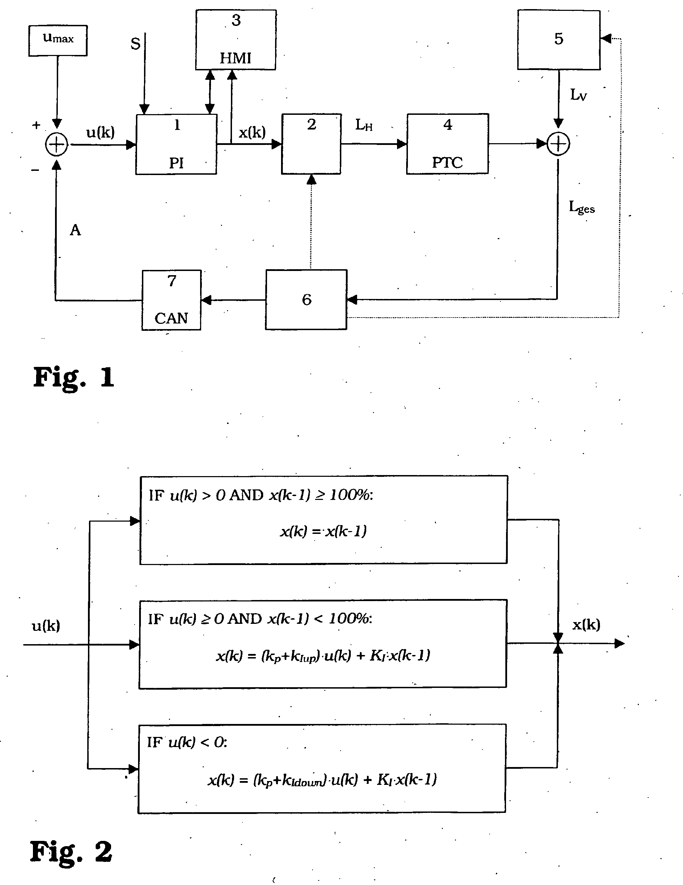

Gemäß der Darstellung in Figur 1 betrifft die Erfindung die Regelung der einem elektrischen Heizelement, zum Beispiel einem PTC-Element 4 eines Kraftfahrzeuges zugeführten elektrischen Leistung $L_H$. Das Heizelement 4 ist dabei erforderlich, um eine schnelle und ausreichende Aufheizung der Fahrgastkabine sicherzustellen, wenn dies durch die Abwärme des Kraftfahrzeugmotors allein nicht erreicht werden kann.

Die dem Heizelement 4 zugeführte elektrische Leistung wird im Wesentlichen einer Lichtmaschine 6 des Kraftfahrzeuges entnommen, welche darüber hinaus noch andere elektrische Verbraucher 5 mit einer Leistung $L_V$ zu versorgen hat. Die gesamte Leistungsentnahme aus der Lichtmaschine 6 beträgt daher $L_{ges} = L_H + L_V$.

Das Ziel einer optimierten Regelung der dem Heizelement 4 zugeführten elektrischen Leistung $L_H$ besteht nun darin, deren Wert einerseits im Hinblick auf einen maximalen Heizerfolg größtmöglich einzustellen und dabei andererseits zu gewährleisten, daß die Lichtmaschine 6 nicht überlastet wird und eine ausreichende Versorgung der übrigen Verbraucher 5 sichergestellt ist.

Um dieses Ziel zu erreichen, ist erfindungsgemäß ein Regler 1 vorgesehen, dessen Kontrollsignal x(k) einer Leistungselektronik 2 zugeführt wird und hierüber die an das Heizelement 4 abgegebene elektrische Leistung $L_H$ stufenlos steuert. Der Index k steht dabei für einen diskretisierten Zeitpunkt.

Das Besondere an dem Regler 1 ist, daß er ein Zustandssignal u(k) erhält, welches die Leistungsbereitschaft der Lichtmaschine 6 signalisiert, also anzeigt, wie viel Leistung momentan der Lichtmaschine maximal entnommen werden kann. Das Zustandssignal u(k) berechnet sich als Differenz aus einer maximal entnehmbaren Leistung $u_{max}$ (welche gegebenenfalls von verschiedenen Größen wie etwa dem Motorbetriebszustand abhängen kann) und einem von der Lichtmaschine 6 über ein Multiplex-Bordnetzwerk 7 (zum Beispiel CAN, MOST, LIN etc.) übermittelten Signal A, das den Arbeitszyklus, bzw. das Taktverhältnis (duty cycle) der Lichtmaschine 6 repräsentiert.

Darüber hinaus kann der Regler 1 weitere Signale S empfangen, welche z.B. die Umgebungstemperatur des Kraftfahrzeuges, die Motortemperatur, die Kabinentemperatur, die Luftfeuchtigkeit in der Kabine oder in der Umgebung, den Ladezustand der Batterie, die Batteriespannung und/oder den Status anderer elektrischer Verbraucher 5 (zum Beispiel Spannung, Stromentnahme) repräsentieren. Diese Signale können zu einer weiteren, vorliegend nicht näher ausgeführten Einstellung des vom Regler abgegebenen Kontrollsignals x(k) herangezogen werden.

Wie aus Figur 1 weiterhin entnehmbar ist, ist der Regler 1 mit einer Benutzerschnittstelle 3 (HMI: Human Machine Interface) gekoppelt. Diese kann visuelle, akustische oder taktile Anzeigevorrichtungen wie Anzeigeinstrumente, eine Stimmrückkopplung (chimes) oder Schalter mit verschiedenen Positionen aufweisen. Des Weiteren kann die Schnittstelle 3 taktile oder akustische Eingabeeinrichtungen wie Druckknöpfe, Schalter, einen Touchscreen oder eine Spracheingabe enthalten, durch welche der Benutzer die Funktionen aktivieren und das aktuelle Verhalten überwachen kann.

Mit dem dargestellten Heizungssystem ist es möglich, zu jedem Zeitpunkt die verfügbare elektrische Leistung bestmöglich zu nutzen. Dies wird zum einen dadurch erreicht, daß der Regler 1 den Arbeitszyklus A der Lichtmaschine 6 sowie weitere Größen S verwendet, um den idealen Betriebspunkt des Heizelementes 4 zu berechnen. Weiterhin ist von Bedeutung, daß die Leistungselektronik 2 eine stufenlose Einstellung der an das Heizelement 4 abgegebenen elektrischen Heizleistung $L_H$ erlaubt, so daß der zur Verfügung stehende Rahmen maximal ausgeschöpft werden kann.

Figur 2 zeigt einen beispielhaften PI-Algorithmus, welcher im Regler 1 von Figur 1 zur Berechnung des Kontrollsignals x(k) aus dem Zustandssignal u(k) verwendet werden kann. Bei diesem Algorithmus werden dabei drei Fälle unterschieden:

1. <u>Fall</u>: Wenn noch Leistungsbereitschaft vorhanden ist und die abgegebene Leistung bereits maximal ist, bleibt deren Wert unverändert, d.h.:

$$u(k) > 0 \text{ UND } x(k-1) \geq 100\% \Rightarrow x(k) = x(k-1)$$

2. <u>Fall</u>: Wenn noch Leistungsbereitschaft vorhanden ist und die abgegebene Leistung noch nicht maximal ist, wird deren neuer Wert nach einem PI Algorithmus mit einem ersten Proportionalfaktor $k_p + k_{Iup}$ erhöht, d.h.:

$$u(k) \geq 0 \text{ UND } x(k-1) < 100\% \Rightarrow x(k) = (k_p + k_{Iup}) \cdot u(k) + K_I \cdot x(k-1)$$

3. <u>Fall</u>: Wenn keine Leistungsbereitschaft mehr vorhanden ist, wird die abgegebene Leistung nach einem PI Algorithmus mit einem zweiten Proportionalfaktor $k_p + k_{Idown}$ vermindert, d.h.:

$$u(k) < 0 \Rightarrow x(k) = (k_p + k_{Idown}) \cdot u(k) + K_I \cdot x(k-1)$$

Durch die Verwendung zweier verschiedener Proportionalitätsfaktoren ist es möglich, auf den Fall 3 einer Überlastung der Lichtmaschine 6 sowie den Normalfall 2 einer bestehenden Leistungsreserve jeweils unterschiedlich und optimal zu reagieren.

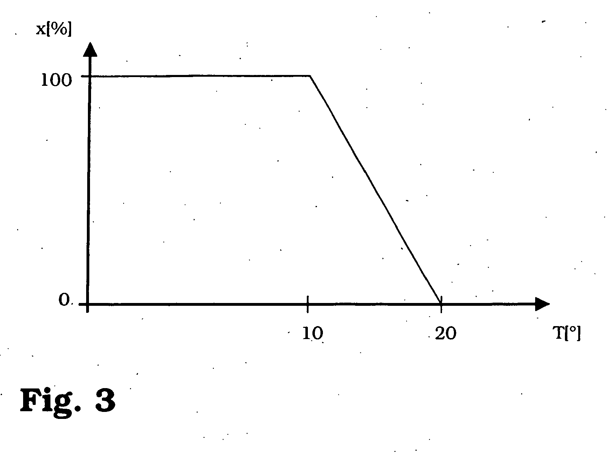

Figur 3 zeigt in einem Diagramm eine weitere, in Figur 1 im Regler 1 integrierbare, von der Kabinentemperatur T abhängige Begrenzungsfunktion für das Kontrollsignal x(k). Dieses wird gemäß dem Diagramm unterhalb einer gemessenen Kabinentemperatur von ca. 10°C auf den Maximalwert von 100% begrenzt, um anschließend zwischen 10°C und 20°C linear auf 0% zurückzugehen.

**Patentansprüche**

1. Elektrisches Heizsystem für ein Kraftfahrzeug, enthaltend ein Heizelement (4) zur Umwandlung der einer elektrischen Energiequelle (6) entnommenen elektrischen Leistung in Wärme sowie ein Regelungssystem (1) zur Regelung der Zufuhr elektrischer Leistung zum Heizelement, wobei das Regelungssystem (1) einen Eingang für ein Zustandssignal (u) aufweist, welches die Leistungsbereitschaft der Energiequelle (6) anzeigt, **dadurch gekennzeichnet, daß** das Heizsystem dahingehend ausgebildet ist, die dem Heizelement (4) zugeführte elektrische Leistung ($L_H$) in Abhängigkeit von dem genannten Zustandssignal mit einem PI-Algorithmus einzustellen, wobei der Proportionalfaktor bei negativem Zustandssignal größer als der Proportionalfaktor bei positivem Zustandssignal ist.

2. Heizsystem nach Anspruch 1,
   **dadurch gekennzeichnet, daß**
   das Regelungssystem (1) über eine Leistungsstufe (2) mit dem Heizelement (4) gekoppelt ist, welche die kontinuierliche Einstellung der an das Heizelement abgegebenen elektrischen Leistung (LH) ermöglicht.

3. Heizsystem nach Anspruch 1 oder 2, wobei
   die elektrische Energiequelle eine Lichtmaschine (6) enthält, von deren Auslastung das Zustandssignal (u) abhängt.

4. Heizsystem nach mindestens einem der Ansprüche 1 bis 3,
   **dadurch gekennzeichnet, daß**
   das Regelungssystem (1) mit einer Benutzerschnittstelle (3) gekoppelt ist zur Anzeige der an das Heizelement (4) abgegebenen elektrischen Leistung (LH) und/oder zur Eingabe von Einstellsignalen durch einen Benutzer.

5. Heizsystem nach mindestens einem der Ansprüche 1 bis 4,
   **dadurch gekennzeichnet, daß**
   das Regelungssystem (1) mit Signalleitungen (S) gekoppelt ist, welche die Umgebungstemperatur, die Motortemperatur, die Kabinentemperatur, die Luftfeuchtigkeit, die Batteriespannung, den Batterieladezustand und/oder den Zustand elektrischer Verbraucher (5) betreffende Signale übermitteln können.

6. Verfahren zur Regelung der Zufuhr der einer elektrischen Energiequelle (6) entnommenen elektrischen Leistung ($L_H$) an das Heizelement (4) eines Kraftfahrzeuges, insbesondere unter Einsatz eines Regelungssystems (1) nach mindestens einem der Ansprüche 1 bis 5, **dadurch gekennzeichnet, dass** die Zufuhr in Abhängigkeit von einem die Leistungsbereitschaft der Energiequelle (6) anzeigenden Zustandssignal (u) mit einem PI-Algorithmus geregelt wird, wobei der Propor6onalfaktor bei negativem Zustandssignal größer als der Proportionalfaktor bei positivem Zustandssignal ist.

7. Verfahren nach Anspruch 6, **dadurch gekennzeichnet, dass** die Zufuhr auf einen Maximalwert begrenzt wird.

**Claims**

1. Electric heating system for a motor vehicle, comprising a heating element (4) for converting the electrical power drawn from an electrical energy source (6) to heat, and a regulating system (1) for regulating the supply of electrical power to the heating element, wherein the regulating system (1) has an input for a status signal (u) which indicates the readiness of the energy source (6) to provide power, **characterized in that** the heating system is embodied in such a way that the electrical power ($L_H$) which is supplied to the heating element (4) is set with a PI algorithm as a function of the aforesaid status signal, the proportional factor in the case of a negative status signal being larger than the proportional factor in the case of a positive status signal.

2. Hating system according to Claim 1, **characterized in that** the regulating system (1) is connected to the heating element (4) via a power stage (2) which permits the continuous setting of the electrical power (LH) which is output to the heating element.

3. Heating system according to Claim 1 or 2, wherein the electrical energy source contains a dynamo (6), on whose utilization factor the status signal (u) depends.

4. Heating system according to at least one of Claims 1 to 3, **characterized in that** the regulating system (1) is connected to a user interface (3) for displaying the electrical power (LH) which is output to the heating element (4) and/or for setting signals to be input by a user.

**5.** Heating system according to at least one of Claims 1 to 4, **characterized in that** the regulating system (1) is connected to signal lines (S) which can convey signals relating to the ambient temperature, the temperature of the engine, the temperature of the passenger compartment, the humidity, the battery voltage, the battery charge state and/or the state of electrical loads (5).

**6.** Method for regulating the supply of the electrical power ($L_H$) which is drawn from an electrical energy source (6) to the heating element (4) of a motor vehicle, in particular using a regulating system (1) according to at least one of Claims 1 to 5, **characterized in that** the supply is regulated with a PI algorithm as a function of a status signal (u) which indicates the readiness of the energy source (6) to provide power, the proportional factor in the case of a negative status signal being larger than the proportional factor in the case of a positive status signal.

**7.** Method according to Claim 6, **characterized in that** the supply is limited to a maximum value.

**Revendications**

**1.** Système de chauffage électrique pour un véhicule automobile, comprenant un élément chauffant (4) pour convertir la puissance électrique prélevée d'une source d'énergie électrique (6) en chaleur ainsi qu'un système de régulation (1) pour réguler l'acheminement de puissance électrique à l'élément chauffant, le système de régulation (1) présentant une entrée pour un signal d'état (u) qui indique que la source d'énergie (6) est prête à délivrer de la puissance, **caractérisé en ce que** le système de chauffage est configuré pour régler la puissance électrique ($L_H$) acheminée à l'élément chauffant en fonction dudit signal d'état avec un algorithme PI, le facteur proportionnel lorsque le signal d'état est négatif étant supérieur au facteur proportionnel lorsque le signal d'état est positif.

**2.** Système de chauffage selon la revendication 1, **caractérisé en ce que** le système de régulation (1) est connecté avec l'élément chauffant (4) par le biais d'un étage de puissance (2) qui permet le réglage continu de la puissance électrique ($L_H$) délivrée à l'élément chauffant.

**3.** Système de chauffage selon la revendication 1 ou 2, **caractérisé en ce que** la source d'énergie électrique contient un alternateur (6) de la charge de l'utilisation duquel dépend le signal d'état (u).

**4.** Système de chauffage selon l'une des revendications 1 à 3, **caractérisé en ce que** le système de régulation (1) est connecté à une interface d'utilisateur (3) pour l'indication de la puissance électrique ($L_H$) délivrée à l'élément chauffant (4) et/ou pour l'entrée de signaux de réglage par un utilisateur.

**5.** Système de chauffage selon l'une des revendications 1 à 4, **caractérisé en ce que** le système de régulation (1) est connecté à des lignes de signal (S) qui peuvent communiquer des signaux concernant la température ambiante, la température du moteur, la température de la cabine, l'humidité de l'air, la tension de la batterie, l'état de charge de la batterie et/ou l'état des charges électriques (5).

**6.** Procédé de régulation de l'acheminement à un élément chauffant (4) d'un véhicule automobile de la puissance électrique ($L_H$) prélevée d'une source d'énergie électrique (6), notamment en utilisant un système de régulation (1) selon au moins l'une des revendications 1 à 5, **caractérisé en ce que** l'acheminement est régulé avec un algorithme PI en fonction d'un signal d'état (u) qui indique que la source d'énergie (6) est prête à délivrer de la puissance, le facteur proportionnel lorsque le signal d'état est négatif étant supérieur au facteur proportionnel lorsque le signal d'état est positif.

**7.** Procédé selon la revendication 6, **caractérisé en ce que** l'acheminement est limité à une valeur maximale.

**Fig. 1**

**Fig. 2**

**Fig. 3**

**EP 1 396 361 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6002105 A
- US 6262400 B1